(19) Europäisches Patentamt / European Patent Office / Office européen des brevets

(11) **EP 4 006 517 A1**

(12) **EUROPEAN PATENT APPLICATION**

(43) Date of publication:
**01.06.2022   Bulletin 2022/22**

(21) Application number: **20020565.6**

(22) Date of filing: **26.11.2020**

(51) International Patent Classification (IPC):
*G01M 5/00* $^{(2006.01)}$

(52) Cooperative Patent Classification (CPC):
**G01M 5/0033; G01M 5/0066; G01M 5/0083**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **RO-RA Aviation Systems GmbH
4862 Schörfling a. Attersee (AT)**

(72) Inventors:
• **Winklberger, Markus
A-4040 Linz (AT)**
• **Kralovec, Christoph
A-4040 Linz (AT)**
• **Heftberger, Peter
A-4861 Schörfling am Attersee (AT)**

(74) Representative: **Keschmann, Marc
Haffner und Keschmann Patentanwälte GmbH
Schottengasse 3a
1010 Wien (AT)**

(54) **METHOD FOR DETECTING AND LOCATING CRACKS IN A PHYSICAL STRUCTURE BY MEANS OF AN ELECTRO-MECHANICAL IMPEDANCE TECHNIQUE**

(57)     A method for detecting and locating cracks in a physical structure by means of an electro-mechanical impedance technique, comprising:
- exciting the structure to mechanical vibrations over a frequency range of excitation frequencies,
- measuring the electro-mechanical impedance spectrum occurring in response to said excitation over the frequency range,
- providing a baseline spectrum that is representative of the pristine structure,
- identifying peaks in the measured spectrum,
- comparing the peaks occurring in the measured spectrum with corresponding peaks occurring in the baseline spectrum,
- detecting frequency shifts of said peaks based on said step of comparing,
- identifying a frequency shift of at least one first peak of said peaks as being sensitive to a crack occurring at a first location of the structure,
- identifying a frequency shift of at least one second peak of said peaks as being sensitive to a crack occurring at a second location of the structure,
- detecting a crack at the first or the second location based on the frequency shift of said at least one first peak and of said at least one second peak.

Fig. 1a

Fig. 1b

Fig. 1c

EP 4 006 517 A1

**Description**

The invention refers to a method for detecting and locating cracks in a physical structure by means of an electro-mechanical impedance technique.

In particular, the invention refers to a method for detecting and locating cracks specifically in lugs, such as single and double shear lugs, including necked lugs.

Double shear lugs are commonly used as connecting elements in aircraft to attach interior components (e.g. overhead bins, galley and lavatory) to the fuselage structure, as well as for structural applications in wings, engine and landing gear systems. There are two major advantages of such kind of attachments. First, these components can be easily removed during maintenance. Due to the bolted connection no screws must be released and no special tools are needed for removal. The second advantage of bolt and lug connections are that they act as pivots and hence introduce no local bending moments in the surrounding structure.

However, such connections do have also well-known disadvantages. Lugs are sensitive to fatigue failure, because high stress concentrations, fretting corrosion and prestresses due to interference fits are present at the lug hole. For the special shape of necked double shear lugs the situation is even more critical. Crack initiation does not only occur at the bolt hole, but also on the outer surface at the transition region between the shaft and the largest diameter of the necked lug. However, for lugs used in critical locations complete failure can lead to catastrophic events. Given the obvious advantages and disadvantages of lug type joints and their essential role for the safe operation of vehicles, a reliable method to detect damages in such components is of paramount interest.

Several SHM-techniques (Structural Health Monitoring) have been proposed to enable the onboard monitoring of mechanical structures during operation. This is possible due to integrated and lightweight sensors mounted directly and permanently on the monitored structure.

The invention refers to the use of an electro-mechanical impedance (EMI) method for monitoring physical structures. The EMI method is easy to implement, since just a single piezoelectric transducer is required that is bonded to the structure surface. In particular, the piezoelectric transducer is used to excite different resonances of the structure and to measure its response at the same time. Therefore, the piezoelectric transducer acts as both an actuator and sensor, simultaneously. Hence, only little space, cabling and additional weight is required on the structure.

Cracks can be detected in the monitored structure by sensing the electro-mechanical impedance spectrum occurring in response to the mechanical excitation of the structure over a frequency range of excitation frequencies. Cracks in the structure result in characteristic changes in the response spectrum, such as a frequency shift of resonance peaks relative to a baseline spectrum that is representative of the pristine structure.

While conventional EMI-methods allow for the detection of a crack in the monitored structure, such detection does not automatically result in a determination of the location of the crack. For on-site monitoring it would be beneficial to localize a crack on basis of only the electro-mechanical impedance spectrum measured by the piezoelectric transducer. In this way, a remote diagnosis of the specific damage would be possible, without having to personally inspect the structure. In particular, it would be beneficial if the electro-mechanical impedance spectrum would provide information that allows to differentiate between at least two specific crack locations and to identify the crack size.

Therefore, it is an object of the invention to develop an EMI-method that allows to detect the location of a crack occurring in the monitored structure and that allows to identify the crack size.

In order to solve this objective, the invention provides a method for detecting and locating cracks in a physical structure by means of an electro-mechanical impedance technique, comprising:

- exciting the structure to mechanical vibrations over a frequency range of excitation frequencies,
- measuring the electro-mechanical impedance spectrum occurring in response to said excitation over the frequency range,
- providing a baseline spectrum that is representative of the pristine structure,
- identifying peaks in the measured spectrum,
- comparing the peaks occurring in the measured spectrum with corresponding peaks occurring in the baseline spectrum,
- detecting frequency shifts of said peaks based on said step of comparing,
- identifying a frequency shift of at least one first peak of said peaks as being sensitive to a crack occurring at a first location of the structure,
- identifying a frequency shift of at least one second peak of said peaks as being sensitive to a crack occurring at a second location of the structure,
- detecting a crack at the first or the second location based on the frequency shift of said at least one first peak and of said at least one second peak.

The invention is based on the finding that frequency shifts of specific peaks of the measured spectrum relative to the baseline spectrum are sensitive to a crack occurring at a specific location of the structure. That is, such frequency shifts occur only (or only in a certain magnitude), if a crack is existing at that specific location, but do not occur (or do not occur in a certain magnitude), if the crack is arranged at another location.

Based on such location-sensitive frequency shifts, it is possible to distinguish between crack locations only by analyzing the frequency shifts of the at least one first peak and the at least one second peak.

In particular, a crack is detected at the first location, when the frequency shift of said at least one first peak is larger than the frequency shift of said at least one second peak.

Conversely, a crack is detected at the second location, when the frequency shift of said at least one second peak is larger than the frequency shift of said at least one first peak.

The identification of the location-sensitive frequency shifts may be done in a similar way. According to a preferred embodiment, identifying the frequency shift of the at least one first peak as being sensitive to a crack occurring at the first location of the structure comprises:

- comparing frequency shifts of a plurality of peaks at the occurrence of a crack at the first location with frequency shifts of said plurality of peaks at the occurrence of a crack at the second location, and
- identifying the at least one first peak as being the peak, the frequency shift of which is greater at the occurrence of a crack at the first location than at the occurrence of a crack at the second location.

In an analogous way, identifying the frequency shift of the at least one second peak as being sensitive to a crack occurring at the second location of the structure may preferably comprise:

- comparing frequency shifts of a plurality of peaks at the occurrence of a crack at the first location with frequency shifts of said plurality of peaks at the occurrence of a crack at the second location, and
- identifying the at least one second peak as being the peak, the frequency shift of which is greater at the occurrence of a crack at the second location than at the occurrence of a crack at the first location.

According to a preferred embodiment, the step of identifying a frequency shift of at least one first peak of said peaks as being sensitive to a crack occurring at a first location of the structure, and the step of identifying a frequency shift of at least one second peak of said peaks as being sensitive to a crack occurring at a second location of the structure are performed in a finite element method (FEM) simulation of the physical structure.

In the above methods of identifying location-sensitive frequency shifts, at least one first peak and at least one second peak are selected among a plurality of candidate peaks. In order to enhance the efficiency of this selection process, the number of candidate peaks shall be minimized. According to a preferred embodiment, specific peaks are selected as candidate peaks, for which a crack location sensitivity is expected based on the mechanical stress that is occurring at the respective location during the vibrational excitement of the structure.

Therefore, a preferred embodiment provides that said plurality of peaks are selected according to the following steps:

- generating a spectrum of the major principal stress $\sigma 1$ occurring at the first and second location, respectively, in response to a mechanical excitation over the frequency range, said step preferably being performed in a finite element method (FEM) simulation of the physical structure,
- identifying local maxima of said stress spectrum and identifying frequencies at which the local maxima occur,
- selecting the peaks in the measured spectrum that occur at the identified frequencies.

Preferably, the step of generating a spectrum of the major principal stress $\sigma 1$ occurring at the first and second location, respectively, comprises generating a mean value of the major principal stress across a region around the first and second location, respectively, such as, e.g. a region of $\pm 10°$ around the location.

As explained above, the EMI method comprises exciting the structure to mechanical vibrations over a frequency range of excitation frequencies, and measuring the electro-mechanical impedance spectrum occurring in response to said excitation over the frequency range. Generally speaking, the frequency range can for example be chosen to be 1-250 kHz, in particular 1-100 kHz. Further, the step size may be chosen to be 100-1000 Hz, preferably 100-300 Hz, more preferably 125 Hz. The step size defines the difference between each two successive excitation frequencies within the frequency range. In order to reduce the frequency range to only the relevant part, where statistically significant results are to be expected, a preferred embodiment of the invention provides that the frequency range of excitation frequencies is determined by obtaining over a frequency range of 1-100 kHz a baseline frequency spectrum that is representative of the pristine structure and a frequency spectrum of the structure having a crack at the first and/or second location, and subjecting the frequency spectra to damage metrics according to the correlation coefficient deviation (CCD) method, and selecting a frequency range, in which the CCD value is > 0.5.

This kind of selection may be performed in a virtual model of the structure, such as in a finite element method (FEM) simulation. Therefore, the step of obtaining over a frequency range of 1-100 kHz a baseline frequency spectrum that is representative of the pristine structure and a frequency spectrum of the structure having a crack at the first and/or second location is preferably performed in a finite element method (FEM) simulation of the physical structure.

According to a preferred embodiment, such selection of the frequency range may preferably result in a range of 50-100 kHz.

A particularly preferred application of the invention is for monitoring the presence of cracks in lugs, such as necked lugs, straight lugs and tapered lugs, and including double shear lugs and single shear lugs.

Therefore, a preferred embodiment provides that the physical structure is a lug comprising a shaft portion having a longitudinal axis and a lug portion. In particular, the physical structure is a necked lug comprising a shaft portion having a longitudinal axis and a lug portion with a neck-type transition portion being arranged between the shaft portion and the lug portion. In case of a necked lug the crack occurring at the first location may be a crack propagating from an inner surface of said lug at a position corresponding to an angle of 90° relative to the longitudinal axis, and the crack occurring at the second location may be a crack propagating from an exterior surface of the transition portion at a position corresponding to an angle of 145° relative to the longitudinal axis.

Tests have been conducted with such necked lugs, wherein it was found that said at least one first peak may preferably exist at a frequency of 60-80 kHz of the baseline spectrum. Further, said at least one second peak may preferably exist at a frequency of 50-58 kHz and/or 85-100 kHz of the baseline spectrum.

More specifically, said at least one first peak may preferably exist at a frequency of 67-68 kHz and/or 77-78 kHz and/or 80-81 kHz of the baseline spectrum.

More specifically, said at least one second peak may preferably exist at a frequency of 51-52 kHz and/or 56-57 kHz and/or 87-88 kHz and/or about 97 kHz of the baseline spectrum.

The method of the invention also allows the assessment of the size of a crack that has been identified to occur at the first or the second location based on the frequency shift data. In particular, it has been found that the amount of the frequency shift is proportional to the crack size. Therefore, a preferred embodiment of the method of the invention further comprises:

- determining the absolute value of the frequency shift of said at least one first peak and/or the absolute value of the frequency shift of said at least one second peak, and
- assessing the size of the crack at the first or the second location, respectively, based on said absolute value.


**Example**

The invention will now be described in more detail by reference to the following exemplary embodiment.

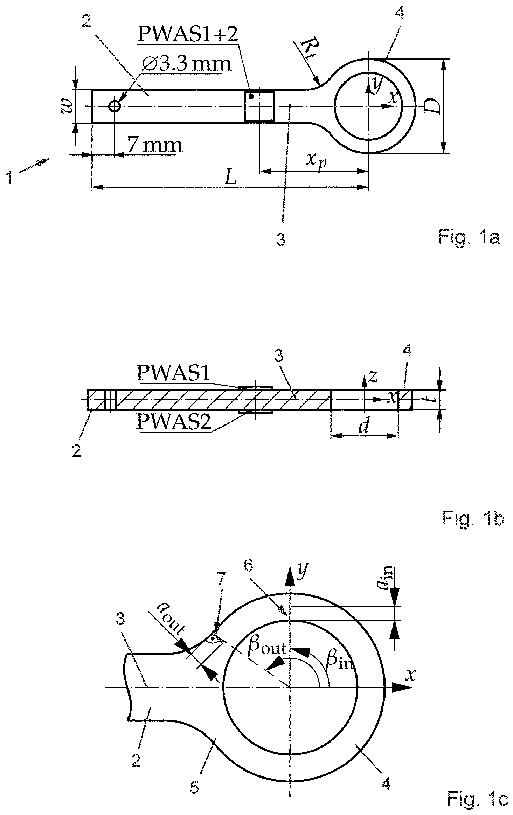

A simplified necked lug geometry is chosen, which is similar in shape and dimensions to lugs in real application (Fig. 1). For such lugs crack initiation was observed in a previous study to take place either at the inside at the bolt hole (90° to the loading direction) or at the outside at the transition region between bolt hole and shaft. Hence, these critical locations of crack initiation are investigated in the present example. Coupled-field Finite Element (FE) models are developed to simulate the PWAS (piezoelectric wafer active sensor) response for each crack location. Additionally, the results of cracks at the bolt hole are validated and compared with measurements of an impedance analyzer (IMA) and a scanning laser Doppler vibrometer (SLDV). Finally, conclusions are drawn about the crack monitoring capabilities with EMI measurements of a single PWAS on a necked lug by combining all these results.


Lug geometry and material

Fig. 1 shows a drawing of the necked lug geometry. The idealized lug has a simple flat geometry. The dimensions are given as D=29mm, d=20.64mm, L=85mm, w=10.31mm, t=6mm and Rt=10mm, which are similar to necked double shear lugs in real applications, e.g. lugs of tie-rods in aircraft.

Fig. 1a is a plan view of the necked lug, Fig. 1b is a cross-sectional view of the necked lug of Fig. 1a and Fig. 1c is a detailed view of the lug portion of the necked lug. The necked lug 1 comprises a shaft portion 2 having a longitudinal axis 3 and a lug portion 4 with a neck-type transition portion 5 being arranged between the shaft portion 2 and the lug portion 4. The lug specimen is made of aluminum EN-AW 7075 plate material.

In Fig. 1c the specified angles $\beta_{in}$ = 90° and $\beta_{out}$ = 145° define the locations of crack initiation at the inside and outside surface of the lug with respect to the longitudinal axis 3. The cracks 6, 7 in this example are defined normal to the corresponding surface of crack initiation. Individual investigations of each crack location (only one crack in the lug at a time) are performed in finite element (FE) simulations. For experimental measurements a crack at a location of $\beta_{in}$ = 90° and a length of 2 mm is introduced using a mechanical fret saw (blade thickness of 0.322 mm measured with an outside micrometer). The lengths of the through-cracks were defined to be rather large in order to obtain significant results to prove the concept of crack detection and identification in necked lugs. Therefore, in FE simulations the crack lengths $a_{in} = a_{out} = 1mm - 3mm$ are chosen for the present example.

Two PWAS were applied on the top and bottom side of the shaft 2 at $x_p = 33.5mm$ away from the bolt axis, see Fig. 1a. The two component epoxy adhesive Loctite EA 9466 was used to apply both PWAS. However, only PWAS1 is used (exited and measured in order to detect the defined cracks with the EMI method) in the present example.

Finite element simulations

Finite element simulations are done with Abaqus CAE 2019 to numerically calculate the resonance mode shapes as well as the impedance spectra captured by the PWAS. Furthermore, velocity results of parts of the lug are used to get mean transfer functions comparable with results of the SLDV.

Definition of FE models and analysis setup

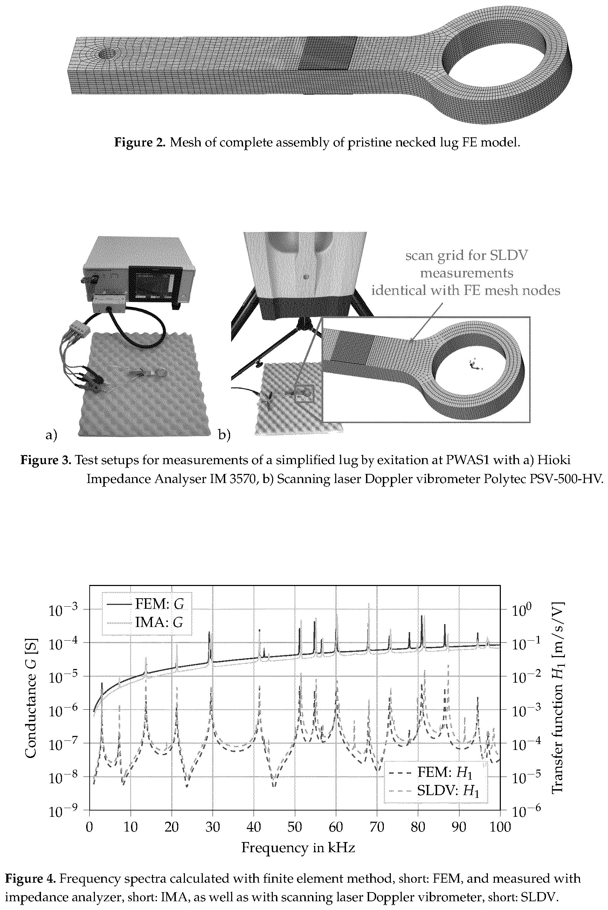

A three-dimensional FE model of the simple necked lug with a PWAS mounted to the upper and lower surface of the shaft is developed, as shown in Fig. 2. To simulate the through-cracks, seams are defined at the two locations indicated in Fig. 1c. The mesh of the lug exclusively consists of 8-node linear brick elements. For the PWAS special 8-node linear piezoelectric (coupled-field) brick elements are used. The overall mesh consists of 30852 finite elements with an average edge length of 0.6mm, as shown in Fig. 2.

The models with an inside crack at $\beta_{in} = 90°$ and an outside crack at $\beta_{out} = 145°$ incorporate an identical mesh as the pristine FE model except the additional nodes at the crack locations, due to the defined seams.

For the lug a linear elastic material model is defined according to the material data sheet with a Young's modulus and a Poisson's ratio of $E = 71.7$ GPa and $\nu = 0.33$, respectively. The density for aluminum is set to $\rho = 2810$ kg/m$^3$. The used Rayleigh damping coefficients for aluminum are $\alpha = 293.215s^{-1}$ and $\beta = 4.126\ 24 \cdot 10^{-10}s$, which are empirical values found by manual fitting of experimental results. The piezoelectric material behavior of the PWAS polarized in z-direction is implemented in Abaqus CAE 2019 by providing three matrices: the piezoelectric matrix [d], the orthotropic elasticity matrix [$c^E$] at constant electric field and the electric permittivity matrix [$\varepsilon^S$] at constant strain. The PWAS' material properties are taken from the supplier's datasheet and are given in Table 1.

**Table 1.** Dimensions and material properties of PWAS (PIC151).

| **Physical and dielectrial properties** | | |
|---|---|---|
| Edge length $\omega_p$ | 10 | mm |
| Thickness $t_p$ | 0.25 | mm |
| Density $\rho_p$ | 7800 | kg/m$^3$ |
| Poisson's ratio $\nu_p$ | 0.34 | - |
| Elastic compliance coefficient in-plane $s_{11}^E$ | $15 \cdot 10^{-12}$ | m$^2$/N |
| Elastic compliance coefficient out-of-plane $s_{33}^E$ | $19 \cdot 10^{-12}$ | $10^{-12}$ m$^2$/N |
| Relative permittivity in the polarization $\varepsilon_{33}^T$ | 2400 $\varepsilon_0$ | As/Vm |
| Relative permittivity in direction perpendicular to polarity $\varepsilon_{11}^T$ | 1980 $\varepsilon_0$ | As/Vm |
| Dielectric loss factor tan $\delta$ | $20 \cdot 10^{-3}$ | - |
| **Electro-mechanical properties** | | |
| Piezoelectric charge coefficient $d_{31}$ | $-210 \cdot 10^{-12}$ | C/N |
| Piezoelectric charge coefficient $d_{33}$ | $500 \cdot 10^{-12}$ | C/N |

The PWAS are connected to the lug upper and lower surface using tie constraints. On the lower surface of each PWAS a constant electric potential of 0.0 V is applied. On the upper surface of just one of the two PWAS a harmonic electric potential with an amplitude of 5.0 V is defined, which results in a combined axial and bending (around the y-axis) excitation of the shaft.

The cracks of length 2mm at locations $\beta_{in} = 90°$ and $\beta_{out} = 145°$ are defined using Abaqus' functionality of seams. According to the Abaqus' manual nodes at defined seams are duplicated, which creates an idealized crack without any opening. Non-linear contact forces between crack faces are neglected.

The developed Abaqus simulation includes a coupled-field FE model within a direct-solution steady-state dynamics analysis. With this type of simulation, the steady-state response of a harmonic loading is calculated for a given set of frequencies. The chosen frequency range is 1 kHz-100 kHz. Additionally, in order to compare the simulations with the experimental measurements the same step size of 125 Hz was chosen. Hence, for each model 793 uniformly distributed frequency responses were calculated.

Processing of raw FE field output

The raw FE field output cannot be directly used for comparison with experimental results. Therefore, to compare the electrical impedance responses in this example the conductance

$$G(\omega) = \mathrm{Re}\left\{Y(\omega)\right\} = \mathrm{Re}\left\{\frac{I(\omega)}{U(\omega)}\right\}, \tag{1}$$

is calculated using the exciting voltage $U(\omega)$ and the resulting current $I(\omega)$ for each specified angular frequency $\omega = 2\pi f$. As already mentioned above the defined boundary condition at the PWAS upper surface is a harmonic electric potential $U(\omega)$ with an amplitude of $U = 5$ V. The complex current $I(\omega)$ results from the derivation with respect to time of the harmonic electric charge Q. Thus, in the frequency domain it can be calculated with $I(\omega) = j\omega \sum_{n=1}^{N_{\mathrm{IMA}}} Q_n$, where j $= \sqrt{-1}$ is the imaginary unit and NIMA is the number of nodes on the upper surface of PWAS1. For each node n of the upper surface of PWAS1 in the FE model the electrical charge $Q_n$ is provided as field output (reactive electrical nodal charge RCHG) by Abaqus. However, Abaqus uses the constitutive equations without considering electric losses, see first two terms of Equation (2). To calculate more accurate results the electrical damping has to be considered, which is given by the dielectric loss factor $\delta$. The piezoelectric constitutive equation with considering electrical damping for the electrical displacement Di is calculated for each material direction i,k,l = 1,2,3 with

$$D_i = \underbrace{d_{ikl}T_{kl} + \varepsilon_{ik}^{T}E_k}_{\substack{\text{used by Abaqus} \\ \text{to calculate } Q_n}} - \underbrace{j\delta\varepsilon_{ik}^{T}E_k}_{\substack{\text{electrical} \\ \text{damping}}}, \tag{2}$$

where $d_{ikl}$ is the piezoelectric matrix, $T_{kl}$ is the stress tensor and $\varepsilon^{T}_{ik}$ is the permittivity matrix at constant stress. Assuming a constant electrical field between the PWAS surface electrodes (area $A_p$) that is only oriented in z-direction ($E_3 = \hat{U}/t_p$) and normal to $A_p$ the electrical charge is calculated with

$$Q = \iint\limits_{A_p} D_3 \, dA. \tag{3}$$

Hence, by inserting Equation (2) into Equation (3) and replacing the double integral by the sum of the numerically calculated $Q_n$ yields the current $I(\omega)$ corrected by the electrical damping

$$I(\omega) = j\omega \left[\sum_{n=1}^{N_{\mathrm{IMA}}} (Q_n) - j\delta\varepsilon_{33}^{T}\frac{\hat{U}}{t_p}A_p\right]. \tag{4}$$

Dielectric loss factor $\delta$, permittivity $\varepsilon^{T}_{33}$, and the thickness of the PWAS $t_p$ are given in Table 1. Due to the peripheral conducting and a conducted area of the quadratic PWAS, which is smaller than its outer dimensions, the effective conducted surface of the PWAS yields $A_p = 79.875 \mathrm{mm}^2$.

Experiments

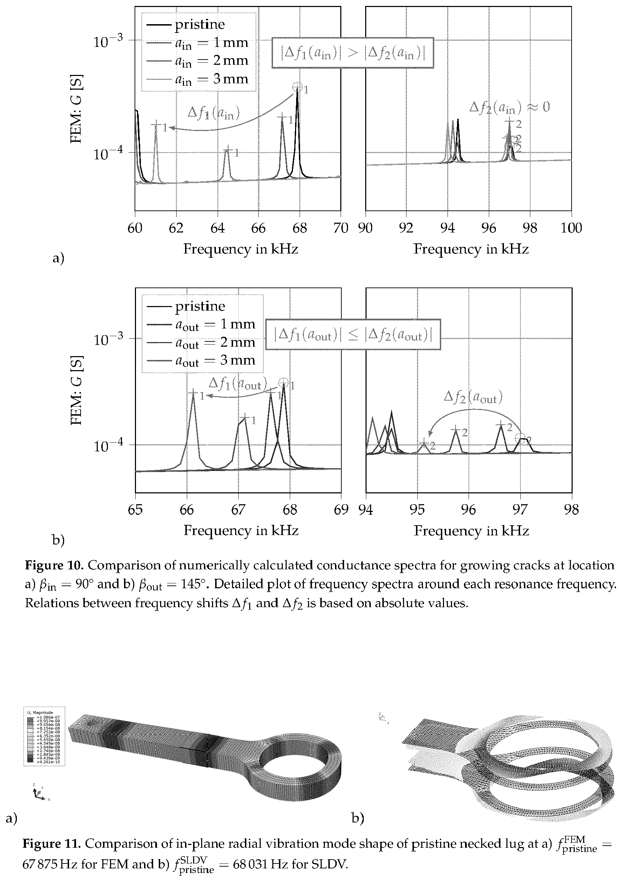

Two experimental setups are used to measure the frequency response of the considered simplified necked lug in the pristine and subsequently in the damaged (crack of length 2mm at $\beta_{in} = 90°$) state. In all experiments only one of the PWAS installed is excited within a frequency range of 1kHz - 100kHz. The first experimental setup is depicted in Figure 3a. The excitation amplitude for the measurement with the impedance analyzer Hioki IM 3570 is $\hat{U}$ = 5√2V. The frequency spectra of PWAS1 are measured with a resolution of 125 Hz and for each frequency step 16 single measurement values are averaged. Figure 3b depicts the second measurement setup with a scanning laser Doppler vibrometer Polytec PSV-500-HV. The excitation used for these measurements is a so-called periodic chirp signal with an amplitude of $\hat{U}$ = 9 V and a resolution in the measured frequency spectrum of 15.625 Hz. The coordinates of $N_{SLDV}$ = 1005 scan points for the upper surface (depicted in Figure 3b) are exported from the FE mesh. For each scan point five measurements were taken and averaged to minimize the signal-to-noise ratio. Additionally, the lower surface with the same amount of scan points were measured in order to better visualize the exited mode shapes, see e.g. Figure 11b.

## Results and discussion

The results calculated with the finite element method (FEM) and measurements with the Hioki Impedance Analyzer (IMA) as well as with the scanning laser Doppler vibrometer (SLDV) are simple frequency spectra. For comparison of calculated and measured resonance frequencies these spectra are plotted in Figure 4 on two different logarithmic scales. On the left y-axis the calculated and measured conductance G = G($\omega$) according to Equation (1) of the PWAS are compared. The right y-axis presents the calculated and measured mean amplitudes of the transfer function $H_1$ = $H_1(\omega)$ defined as

$$H_1(\omega) = \frac{1}{N_{SLDV}} \sum_{n=1}^{N_{SLDV}} \text{abs} \left\{ \frac{v_n(\omega)}{U(\omega)} \right\}, \tag{5}$$

where $v_n(\omega)$ is the complex out-of-plane velocity of each scan point n of the upper surface of the lug (see detail of front section of the lug in Figure 3b). In Figure 4 one can see that most resonance peaks of all four spectra fit quite well to each other. The calculated spectra (FEM: G and FEM: $H_1$) yield identical resonance frequencies. Between measured and calculated pristine spectra a deviation less than 1 % is observed for most of the resonance frequencies. Only two resonances at 42.5 kHz and 77.875 kHz show a larger deviation of up to 2.6 %. These two modes are mainly dominated by flexural in-plane bending of the ring-shaped part of the lug. The overall shapes of calculated and measured pristine spectra, qualitatively compared, fit well together. Furthermore, calculated and measured amplitudes of the pristine spectra yield values in the same order of magnitude. Therefore, the numerical model is considered to represent the real measurement setups quite well in terms of electrical and mechanical responses.

However, to address the initial questions regarding crack detection and identification possibilities with PWAS in necked lugs, a two-step analysis of the EMI measurement results is used. First, common damage metrics are used to evaluate a measured spectra with respect to a previous baseline measurement (in SHM applications typically of the undamaged state) for a simple and efficient damage detection. Second, specific spectral features of the calculated and measured frequency spectra are investigated in more detail to validate the detection result and furthermore conclude on the damage location and size. Special emphasis is given to resonance frequencies and mode shapes of the considered necked double shear lug that are most sensitive to cracks at critical locations. These are found model-based by means of coupled-field FE simulations.

## Damage metrics: crack detection

One simple way to compare different frequency spectra are damage metrics. Commonly used damage metrics are the root mean square deviation (RMSD), the mean absolute percentage deviation (MAPD) and the correlation coefficient deviation (CCD) which are calculated with

$$\text{RMSD} = \sqrt{\frac{\sum_{i=1}^{N_S} \left(S_i - S_i^0\right)^2}{\sum_{i=1}^{N_S} \left(S_i^0\right)^2}} \tag{6}$$

$$\text{MAPD} = \sum_{i=1}^{N_S} \left| \frac{S_i - S_i^0}{S_i^0} \right| \tag{7}$$

$$CCD = 1 - \frac{\sum_{i=1}^{N_S} (S_i - \bar{S})(S_i^0 - \bar{S}^0)}{\sqrt{\sum_{i=1}^{N_S} (S_i - \bar{S})^2 \sum_{i=1}^{N_S} (S_i^0 - \bar{S}^0)^2}} \tag{8}$$

where $N_s$ is the number of frequencies in the spectrum. The spectrum elements $S_i$ and $S_i^0$ used in this paper are either the conductance G for electrical responses or the transfer function $H_1$ for mechanical responses. The superscript 0 denotes spectral elements of the pristine structure without a crack. Mean values of spectra are indicated with S and $S^0$.

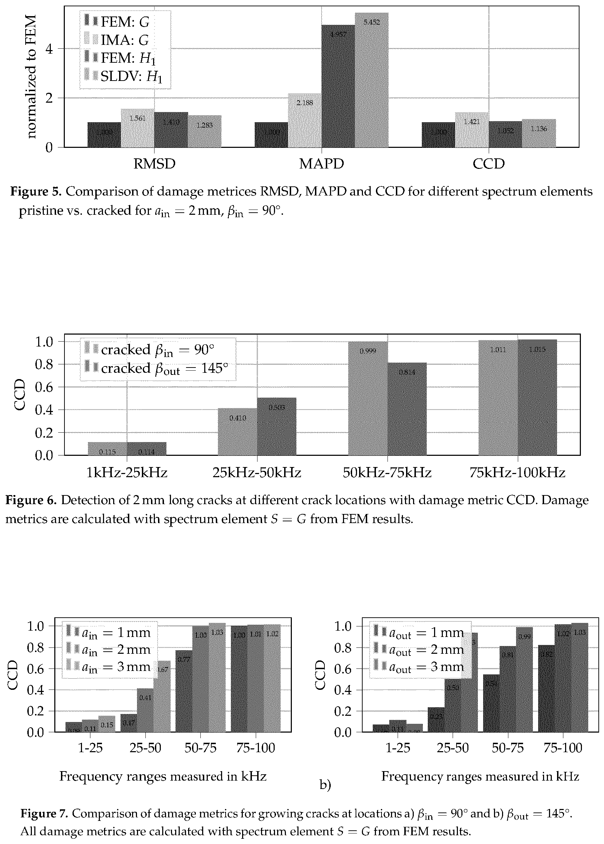

In order to compare pristine with damaged spectra calculated with the finite element method and measured with the impedance analyser as well as with the SLDV the damage metrics given in Equation (6), (7) and (8) are computed for $N_s$ = 793 sample points within the frequency range of 1 kHz-100 kHz (sample rate of 125 Hz). Figure 5 presents the damage metrics calculated from FEM simulations (S = G and S = $H_1$) as well as IMA (S = G) and SLDV (S = $H_1$) measurements from the necked lug with a crack of length $a_{in}$ = 2mm at $\beta_{in}$ = 90° with respect to the pristine state without a crack. For comparison all calculated damage metrics are normalized by the FEM results. The values of damage metrics RMSD and CCD yield similar results, even though spectra with different elements (G and $H_1$) are compared. However, the values of damage metric MAPD differ from each other significantly. Especially, the damage metric MAPD of calculated spectra $H_1$ yields a four times larger value than for the calculated conductance spectra G. A closer look to Equation (7) for damage metric MAPD and comparing it to the other two damage metrics could explain this deviation. The numerator of MAPD holds the spectrum element of the pristine structure for each frequency step. This is in contrast to the other two damage metrics where the numerator holds a sum of all spectrum elements, which reduces the impact of large spectral deviations at single frequencies. Therefore, further analysis and visualization of results is based on the damage metric CCD, which shows the best correlation across compared spectra (FEM: G and $H_1$, IMA: G, SLDV: $H_1$) in Figure 5.

In Figure 6 values of damage metric CCD (computed with FEM) are compared for the two considered failure locations ($\beta_{in}$ = 90° and $\beta_{out}$ = 145°). To identify regions of the spectra, which are most sensitive to the considered damage (crack lengths $a_{in}$ = $a_{out}$ = 2mm), the full spectrum range is divided into four parts: 1kHz-25kHz, 25kHz-50kHz, 50kHz-75kHz and 75kHz-100kHz. Subsequently, the damage metrics are calculated for each part of the spectrum separately. For both crack locations the damage metrics CCD yield highest values for frequencies above 50 kHz (this is also true for damage metrics RMSD and MAPD). Similar trends are observed if the crack lengths are varied. Simulations with FE models and cracks of lengths between 1mm-3mm show that the frequency ranges above 50 kHz yield the highest values for the considered damage metrics, see Figure 7. Additionally, for most frequency ranges a strong correlation between crack length and damage metric value can be observed. Hence, to detect a crack in necked lugs the damage metrics values of frequency ranges above 50 kHz can be used. Based on these FEM results a threshold limit of CCD > 0.5 in the frequency ranges above 50 kHz is proposed for detecting a crack with a minimum length of a = 1mm at locations $\beta_{in}$ = 90° and $\beta_{out}$ = 145°. This rather large threshold level is believed to be robust enough against uncertainties in real measurements (signal noise, temperature changes, etc.). In fact, damage metrics calculated by comparing the pristine spectra of independent experimental measurements with PWAS1 and PWAS2 yield values of CCD < 0.1 for all frequency ranges. Nevertheless, experiments with increasing crack lengths and varying environmental influences are needed to validate the chosen crack detection threshold limit. Furthermore, the numerically calculated values of damage metrics give no clear information to evaluate if a crack initiates at the critical location on the inside or the outside surface. Therefore, spectral features of the identified highly sensitive frequency range above 50 kHz are investigated in more detail in a second analysis step.

Spectral features: crack localization

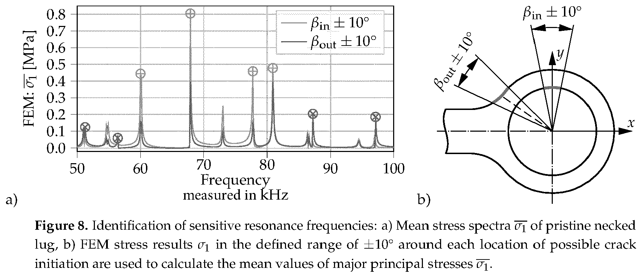

Besides using damage metrics also spectral features can be utilized to identify structural changes. In this example the considered structural changes are cracks, which initiate at two specific locations that show high stress concentrations at operational loads. After crack initiation cracks usually grow in directions perpendicular to the major principal stress. As a crack reduces the stress in this major principal direction to zero at its face, it is assumed that vibration modes of the pristine structure that show a large major principal stress at a location of interest are also sensitive to the occurrence of a crack. Therefore, to identify resonance frequencies which are sensitive to occurring cracks at the two critical locations, spectra of mean major principal stresses $\overline{\sigma_1}$ are investigated. These mean stresses $\overline{\sigma_1}$ are calculated by averaging all FEM stress results $\sigma 1$, computed in coupled-field FE simulations (dynamic excitation of PWAS1 mounted on the pristine necked lug) on the surfaces within an angle $\pm 10°$ around both locations of possible crack initiation ($\beta_{in}$ = 90°, $\beta_{out}$ = 145°), see Figure 8b.

In Figure 8a the mean values of the major principal stresses $\overline{\sigma_1}$ are plotted in the frequency range between 50kHz-100kHz. The spectrum of $\overline{\sigma_1}$ at the inside surface of possible crack initiation yields the highest resonance peaks, marked with $\oplus$ in Figure 8a. The most prominent resonance frequency appears at f ≈ 68 kHz.

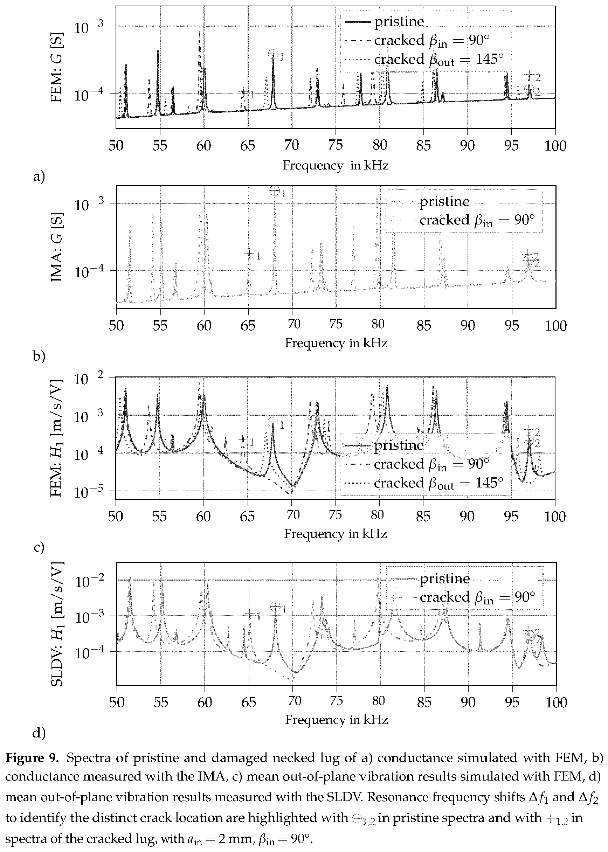

For the location of possible crack initiation at the outside surface the resonance peaks yield smaller amplitudes for most frequencies. Only four resonance frequencies at f ≈ 51 kHz, 56 kHz, 87 kHz and 97 kHz have higher stress amplitudes at the outside surface of possible crack initiation than at the inside surface of possible crack initiation (marked with ⊗ in Figure 8a). Hence, it is assumed that a monitoring of these resonance frequencies can be used to distinguish between a crack growth from the inside or outside surface. Subsequently, in Figure 9 pristine and damaged (cracks of length 2mm at locations $\beta_{in}$ = 90° and $\beta_{out}$ = 145°) state spectra are plotted in the frequency range of 50 kHz-100 kHz. As expected, at frequencies with the highest stress amplitudes $\overline{\sigma_1}$ (marked with ⊕ in Figure 8) the resulting shifts of resonance frequencies between pristine and cracked state are larger for the inside crack than for the outside crack. In contrast, the identified frequencies where the stress amplitudes $\overline{\sigma_1}$ for the outside crack are larger than for the inside crack (marked with ⊗ in Figure 8) the frequency shifts for the outside crack are significantly larger. Moreover, these resonance frequencies are almost insensitive for a crack at $\beta_{in}$ = 90°, which is clearly illustrated in Table 2. This special behavior can be used to differentiate between the two critical crack locations of the considered structure. Frequency shifts Δf = $f_{cracked}$ - $f_{pristine}$ for resonance frequencies marked with ⊕ (largest major principal stress around $\beta_{in}$ = 90°), which are larger than frequency shifts at resonance frequencies marked with ⊗ (largest major principal stress around $\beta_{out}$ = 145°), indicate a crack growth starting from the inside surface.

In contrast, for a crack initiating at $\beta_{out}$ = 145° the frequency shifts at resonance frequencies marked with ⊗ are larger or at least in a similar range compared to frequency shifts at resonance frequencies marked with ⊕. Therefore, a monitoring of only two resonance frequencies with contrasting sensitivities for the two crack locations is sufficient to identify the distinct crack location for the two considered possibilities. However, employing more sensitive resonance frequencies can increase the reliability of the localization or allow the differentiation between more damage locations.

**Table 2.** Comparison of resonance frequencies in the conductance spectra G calculated with FEM for both crack locations. The relative shifts of resonance frequencies for each crack location are highlighted in orange and blue, respectively.

| Marker in Fig. 8 | $f_{pristine}$ [Hz] | $a_{in}$ = 2 mm, $\beta_{in}$ = 90° | | | | $a_{out}$ = 2 mm, $\beta_{out}$ = 145° | | |
| --- | --- | --- | --- | --- | --- | --- | --- | --- |
| | | $f_{cracked}$ [Hz] | Δf [Hz] | [%] | | $f_{cracked}$ [Hz] | Δf [Hz] | [%] |
| ⊗ | 51125 | 51000 | -125 | -0.24 | | 50500 | -625 | -1.22 |
| ⊗ | 56500 | 56375 | -125 | -0.22 | | 55625 | -875 | -1.55 |
| ⊕ | 60000 | 59500 | -500 | -0.83 | | 59750 | -250 | -0.42 |
| ⊕ | 67875 | 64500 | -3375 | -4.97 | | 67125 | -750 | -1.10 |
| ⊕ | 77875 | 75875 | -2000 | -2.57 | | 77500 | -375 | -0.48 |
| ⊕ | 80875 | 79250 | -1625 | -2.01 | | 80375 | -500 | -0.62 |
| ⊗ | 87250 | 87125 | -125 | -0.14 | | 84875 | -2375 | -2.72 |
| ⊗ | 97000 | 97000 | 0 | 0.00 | | 95750 | -1250 | -1.29 |

To visualize the proposed crack localization method, the influence of growing cracks at each location on simulated FEM conductance spectra (separate simulations for each crack length and location) is analyzed around two resonance frequencies ($f_{1,pristine}$ =67.875 kHz is highly sensitive to a crack at $\beta_{in}$ = 90° and less sensitive to a crack at $\beta_{out}$ = 145°; $f_{2,pristine}$ = 97 kHz is highly sensitive to a crack at $\beta_{out}$ = 145° and almost insensitive to a crack at $\beta_{in}$ = 90°). In Figure 9 and Figure 10 these resonance frequency peaks are highlighted with $\oplus_{1,2}$ and $+_{1,2}$ of the pristine and cracked states, respectively.

The spectra of a growing crack at $\beta_{in}$ = 90° are depicted in Figure 10a (one graph for each chosen resonance frequency with adapted x-axis scaling for better visualization). At this crack location the first chosen resonance frequency $f_1$ shows a significant shift of resonance peaks $\Delta f_1(a_{in})$ to lower frequencies and the second resonance frequency $f_2$ shows almost no shift in frequencies ($\Delta f_2(a_{in})$ ≈ 0) due to a growing crack (considering absolute values). In contrast, for a developing crack at $\beta_{out}$ = 145°, both chosen resonance frequencies $f_1$ and $f_2$ show similar frequency shifts (in absolute values) to lower frequencies, see Figure 10b. Nevertheless, for all crack lengths $a_{out}$ the absolute values of frequency shifts satisfy the condition |Δf1 ($a_{out}$)| ≤ |$\Delta f_2$ ($a_{out}$)|. Hence, if |$\Delta f_1$| > |$\Delta f_2$| a crack at $\beta_{in}$ = 90° is indicated and if |$\Delta f_1$| ≤ |$\Delta f_2$| a crack at $\beta_{out}$ = 145° is indicated.

The performed experiments show similar results and verify the methodology to identify the crack localization using two resonance frequency shifts, see Table 3. In Figure 9 the overall shapes of calculated and measured spectra of the cracked necked lug ($a_{in}$ = 2mm, $\beta_{in}$ = 90°), qualitatively compared, fit well together. Resonance frequencies of measured and calculated spectra of the cracked lug show a similar (small) deviation as observed for the spectra of the pristine lug. In order to experimentally demonstrate the crack localization both chosen resonance frequency shifts in calculated and measured spectra are presented in Table 3. It is clearly seen, that in measured and calculated spectra $|\Delta f_1| > 4$ %, whereas $|\Delta f_2| \approx 0$ %, which indicates a crack at $\beta_{in} = 90°$.

Table 3. Chosen resonances $f_1$ and $f_2$ of pristine and cracked state ($a_{in}$ = 2 mm, $\beta_{in}$ = 90°) from simulation and experiments to identify the crack location.

| | $f_{1,pristine}$ [Hz] | $f_{1,cracked}$ [Hz] | $\Delta f_1$ [Hz] | $\Delta f_1$ [%] | $f_{2, pristine}$ [Hz] | $f_{2,cracked}$ [Hz] | $\Delta f_2$ [Hz] | $\Delta f_2$ [%] |
|---|---|---|---|---|---|---|---|---|
| FEM: $G$, $H_1$ | 67875 | 64500 | -3375 | -4.97 | 97000 | 97000 | 0 | 0.00 |
| IMA: $G$ | 68000 | 65125 | -2875 | -4.23 | 96875 | 96750 | -125 | -0.18 |
| SLDV: $H_1$ | 68031 | 65094 | -2937 | -4.32 | 96984 | 96797 | -187 | -0.28 |

The most significant shifts of resonance frequencies in calculated and measured spectra happens for the resonance frequency f ≈ 68 kHz of the pristine necked lug, see Figure 9 and 10. This resonance frequency is highly sensitive to a crack at $\beta_{in} = 90°$ and also shows a significant frequency shift for a crack at $\beta_{out} = 145°$, see Table 2. Therefore, in order to estimate the crack size this specific resonance frequency is analyzed in more detail.

Spectral features: crack size

The mode shape for the resonance frequency f ≈ 68 kHz of the pristine necked lug is depicted in Figure 11.

In the FEM contour plot it can be seen that the shaft of the necked lug vibrates axially and the ring-shaped part of the lug vibrates in-plane radially with four nodes, see Figure 11a. With the SLDV only out-of-plane deformations can be measured, and hence in Figure 11b the transverse thickness deformation due to the in-plane radial vibration is visualized. This specific resonance frequency, where the ring-shaped part of the lug vibrates predominately in-plane with radial displacements shall be studied analytically. For this purpose, the necked lug depicted in Figure 1a is roughly split up into a straight bar and a simple ring.

In order to approximate the relation between the vibration frequency and the geometry of the ring we simply consider an in-plane purely radial vibration. With a mean radius of $r_m$ = (D + d)/4 the natural frequency is

$$f_{radial} = \frac{1}{2\pi r_m}\sqrt{\frac{E}{\rho}}. \tag{9}$$

Given the dimensions of the ring-shaped front end of the reference lug, as described above, the natural frequency of the in-plane radial vibration of a simple ring yields $f_{radial}$ = 64.782 kHz. This analytically calculated natural frequency is close to the resonance frequency of the lug at 67.875 kHz even though the lug's shaft is neglected in Equation (9). Also, for necked lugs with similar geometry but different mean ring radius rm such an in-plane mode shape exists, which has a resonance frequency close to the in-plane radial resonance frequency of a corresponding simple ring. This specific resonance frequency changes reciprocally proportional with $r_m$, as shown in Table 4, which is also characterized by Equation 9. Additionally, the analytic in-plane radial resonance frequency of the simple ring is independent of the ring thickness, see Equation (9). Subsequently, changing the thickness t of the lug has small influence on the numerically calculated radial resonance frequencies of the necked lug, see Table 4.

**Table 4.** Comparison of resonances frequencies of in-plane radial vibration computed analytically with Equation. (9) and FEM simulation for different lug geometries.

| geometry | $r_m$ [mm] | $t$ [mm] | $f_{pristine}^{analytic}$ [Hz] | $f_{pristine}^{FEM}$ pristine [Hz] |
|---|---|---|---|---|
| reference | 12.41 | 6 | 64782 | 67875 |
| $t_{small}$ | 12.41 | 3 | 64782 | 68000 |
| $t_{large}$ | 12.41 | 9 | 64782 | 67750 |
| $r_{m,small}$ | 11.41 | 6 | 70460 | 70750 |

(continued)

| geometry | $r_m$ [mm] | $t$ [mm] | $f_{\text{pristine}}^{\text{analytic}}$ [Hz] | $f_{\text{pristine}}^{\text{FEM}}$ pristine [Hz] |
|---|---|---|---|---|
| $r_{m,\text{large}}$ | 13.41 | 6 | 59951 | 64625 |

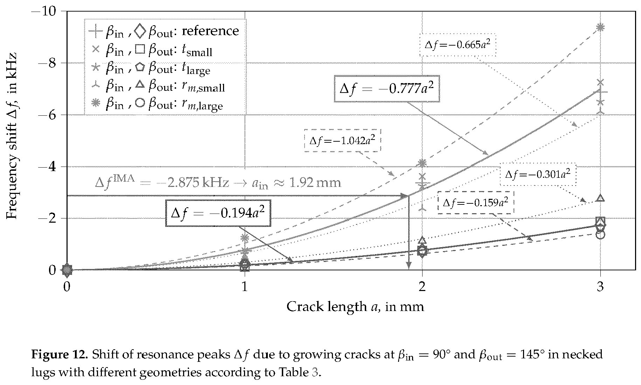

However, for lugs with different thickness or mean radius this specific in-plane radial mode shape is highly sensitive to radial cracks. As already presented for the reference lug geometry a growing crack at $\beta_{\text{in}} = 90°$ shows a much larger deviation of resonance peaks than a crack at $\beta_{\text{out}} = 145°$, see Figure 10. For different geometries, this behavior can be displayed well if the frequency shifts ($\Delta_f = f_{\text{cracked}} - f_{\text{pristine}}$) of considered resonance frequencies are plotted over the crack length, see Figure 12. For both crack locations a nonlinear relationship between crack length and resulting frequency shift is found. For the reference lug geometry (t = 6mm, $r_m$ = 12.41mm, a = 1mm - 3mm) a least squares fit to quadratic functions yields resonance frequency shifts of $\Delta f = \lambda a^2$ with $\lambda$ = -0.777 kHz/mm2 for the inside crack at $\beta_{\text{in}} = 90°$ and $\lambda$ = -0.194 kHz/mm2 for the outside crack at $\beta_{\text{out}} = 145°$. Similar trends are shown for other geometries $r_m$ given in Figure 12. However, a change in the lug's thickness has small influence on the frequency shifts due to crack growth, see Figure 12. It can be concluded that an estimation of crack length with the trends of frequency shifts due to crack growth is robust against manufacturing uncertainties of the thickness and also can be used for similar geometries with varying mean radius $r_m$.

The presented model-based method (developed using coupled field FE simulations) is now being checked using experimental measurements. Given the frequency shift measured with the impedance analyzer ($\Delta f^{\text{IMA}}$ = -2.875kHz) yields an estimated crack size of $a_{\text{in}}$ = 1.92mm, see Figure 12. This result fits well to the introduced crack length of 2mm. The small deviation in estimated crack length may result from the finite width of the introduced crack (compared to zero crack width in FE models) or manufacturing deviations (e.g. actual crack length, roundness of lug ring).

Conclusions

A variety of FE simulations as well as measurements with an impedance analyzer and a scanning laser Doppler vibrometer has been performed to investigate the EMI-based crack detection and identification in necked double shear lugs. The developed FEM models for coupled-field simulations yield frequency spectra which fit well to all experimental measurements in the considered frequency range of 1kHz-100kHz. The calculated and measured resonance frequencies of conductance G and transfer function H1 show less than 1% deviation, except for two in-plane flexural modes at 42.5kHz and 77.875kHz which show a deviation up to 2.6%.

Analyzed frequency spectra from FEM simulations and measurements clearly reflect artificially introduced through-cracks in the considered necked lug. The two critical locations of crack initiation (inside at the bolt hole at $\beta_{\text{in}}$ = 90° and outside at the transition region between shaft and largest diameter of the lug at $\beta_{\text{out}}$ = 145°) have been investigated.

In a first analysis step common damage metrics were investigated to identify regions of the spectrum, which are most sensitive to through-cracks at both locations. Thus, the full frequency range was separated in four parts (1kHz-25kHz, 25kHz-50kHz, 50kHz-75kHz and 75kHz-100kHz) and damage metrics were evaluated for each individual range. All calculated damage metrics (CCD, RMSD and MAPD) for both crack locations yield the highest values for frequencies above 50 kHz and reflect the presence of a crack. The CCD metric shows best comparability between numerical and experimental results. In the considered frequency ranges above 50kHz a crack length of 1mm could be readily detected if the damage metric CCD exceeds a proposed threshold level of CCD > 0.5. This comparatively high threshold level is assumed to be robust against environmental influences (e.g. measurement noise, temperature changes). Hence, crack detection in necked lugs is possible by simply evaluating the damage metric CCD in frequency ranges of 50kHz-75kHz and 75kHz-100kHz.

In a second step spectral features are analyzed within the identified frequency range which is highly sensitive to crack initiation. Initially, spectra of the mean values of major principal stresses around both considered crack locations are investigated by the FE model. A comparison of the amplitude of each resonance peak indicates if the corresponding resonance frequency is sensitive to a crack at the inside or outside surface. This model-based approach yields two frequencies, which show different sensitivities to the considered critical crack locations. Together with monitoring their frequency shifts $\Delta f$ the distinct crack location can be identified for both, numerical and experimental results. Additionally, spectral features that show one of the two expected changes of the resonance frequency verify the damage-metric-based crack detection of first evaluation step.

Subsequently, the resonance peak of the necked lug, which yields a frequency close to the analytically calculated in-plane radial vibration frequency of a simple ring (with corresponding dimensions), is found to be highly sensitive to crack formation at both critical locations. This effect is further analyzed to estimate the crack size. The specific resonance shows the highest frequency shifts due to growing cracks at $\beta_{\text{in}} = 90°$ and is also strongly affected by cracks at $\beta_{\text{out}} =$

145°. Monitoring this specific resonance frequency yields clear relationships between frequency shift $\Delta f$ and length a of a crack at both considered critical locations, allowing a model-based crack size estimation for the experimental measurements. The identification of crack location and size is done in a model-based approach using an adequate FE model, and hence is expected to be suitable for other geometries similar to necked double shear lugs.

Consequently, the EMI method shows high potential for structural health monitoring of necked double shear lugs on different levels. It is first possible to distinguish between crack locations. It is further possible to quantify their lengths which allows to estimate the corresponding stress intensity factors for operational loads, which finally enables the prognosis of the remaining fatigue life of necked double shear lugs.

**Claims**

1. A method for detecting and locating cracks in a physical structure by means of an electro-mechanical impedance technique, comprising:

   - exciting the structure to mechanical vibrations over a frequency range of excitation frequencies,
   - measuring the electro-mechanical impedance spectrum occurring in response to said excitation over the frequency range,
   - providing a baseline spectrum that is representative of the pristine structure,
   - identifying peaks in the measured spectrum,
   - comparing the peaks occurring in the measured spectrum with corresponding peaks occurring in the baseline spectrum,
   - detecting frequency shifts of said peaks based on said step of comparing,
   - identifying a frequency shift of at least one first peak of said peaks as being sensitive to a crack occurring at a first location of the structure,
   - identifying a frequency shift of at least one second peak of said peaks as being sensitive to a crack occurring at a second location of the structure,
   - detecting a crack at the first or the second location based on the frequency shift of said at least one first peak and of said at least one second peak.

2. Method according to claim 1, wherein identifying the frequency shift of the at least one first peak as being sensitive to a crack occurring at the first location of the structure comprises:

   - comparing frequency shifts of a plurality of peaks at the occurrence of a crack at the first location with frequency shifts of said plurality of peaks at the occurrence of a crack at the second location, and
   - identifying the at least one first peak as being the peak, the frequency shift of which is greater at the occurrence of a crack at the first location than at the occurrence of a crack at the second location.

3. Method according to claim 1 or 2, wherein identifying the frequency shift of the at least one second peak as being sensitive to a crack occurring at the second location of the structure comprises:

   - comparing frequency shifts of a plurality of peaks at the occurrence of a crack at the first location with frequency shifts of said plurality of peaks at the occurrence of a crack at the second location, and
   - identifying the at least one second peak as being the peak, the frequency shift of which is greater at the occurrence of a crack at the second location than at the occurrence of a crack at the first location.

4. Method according to claim 1, 2 or 3, wherein the step of identifying a frequency shift of at least one first peak of said peaks as being sensitive to a crack occurring at a first location of the structure, and the step of identifying a frequency shift of at least one second peak of said peaks as being sensitive to a crack occurring at a second location of the structure are performed in a finite element method (FEM) simulation of the physical structure.

5. Method according to claim 2, 3 or 4, wherein said plurality of peaks are selected according to the following steps:

   - generating a spectrum of the major principal stress $\sigma 1$ occurring at the first and second location, respectively, in response to a mechanical excitation over the frequency range, said step preferably being performed in a finite element method (FEM) simulation of the physical structure,
   - identifying local maxima of said stress spectrum and identifying frequencies at which the local maxima occur,
   - selecting the peaks in the measured spectrum that occur at the identified frequencies.

6. Method according to any one of claims 1 to 5, wherein the frequency range of excitation frequencies is determined by obtaining over a frequency range of 1-250 kHz, in particular 1-100 kHz, a baseline frequency spectrum that is representative of the pristine structure and a frequency spectrum of the structure having a crack at the first and/or second location, and subjecting the frequency spectra to damage metrics according to the correlation coefficient deviation (CCD) method, and selecting a frequency range, in which the CCD value is > 0.5.

7. Method according to claim 6, wherein the step of obtaining over a frequency range of 1-250 kHz, in particular 1-100 kHz, a baseline frequency spectrum that is representative of the pristine structure and a frequency spectrum of the structure having a crack at the first and/or second location is performed in a finite element method (FEM) simulation of the physical structure.

8. Method according to any one of claims 1 to 7, wherein the structure is excited to mechanical vibrations over a frequency range of 50-100 kHz.

9. Method according to any one of claims 1 to 8, wherein the physical structure is a lug comprising a shaft portion having a longitudinal axis and a lug portion, in particular a necked lug comprising a shaft portion having a longitudinal axis and a lug portion with a neck-type transition portion being arranged between the shaft portion and the lug portion.

10. Method according to claim 9, wherein the crack occurring at the first location is a crack propagating from an inner surface of said lug at a position corresponding to an angle between 80° and 100° relative to the longitudinal axis, and the crack occurring at the second location is a crack propagating from an exterior surface of the transition portion at a position corresponding to an angle between 135° and 155° relative to the longitudinal axis.

11. Method according to claim 9 or 10, wherein said at least one first peak is at a frequency of 60-80 kHz of the baseline spectrum.

12. Method according to claim 9, 10 or 11, wherein said at least one second peak is at a frequency of 50-58 kHz and/or 85-100 kHz of the baseline spectrum.

13. Method according to any one of claims 9 to 12, wherein the necked lug is exited to mechanical vibrations by means of a piezoelectric active wafer sensor (PWAS) that is fixed to the shaft portion of the necked lug.

14. Method according to any one of claims 1 to 13, further comprising

- determining the absolute value of the frequency shift of said at least one first peak and/or the absolute value of the frequency shift of said at least one second peak, and
- assessing the size of the crack at the first or the second location, respectively, based on said absolute value.

Fig. 1a

Fig. 1b

Fig. 1c

**Figure 2.** Mesh of complete assembly of pristine necked lug FE model.

scan grid for SLDV
measurements
identical with FE mesh nodes

a)          b)

**Figure 3.** Test setups for measurements of a simplified lug by exitation at PWAS1 with a) Hioki
Impedance Analyser IM 3570, b) Scanning laser Doppler vibrometer Polytec PSV-500-HV.

**Figure 4.** Frequency spectra calculated with finite element method, short: FEM, and measured with
impedance analyzer, short: IMA, as well as with scanning laser Doppler vibrometer, short: SLDV.

**Figure 5.** Comparison of damage metrices RMSD, MAPD and CCD for different spectrum elements pristine vs. cracked for $a_{in} = 2\,mm$, $\beta_{in} = 90°$.

**Figure 6.** Detection of 2 mm long cracks at different crack locations with damage metric CCD. Damage metrics are calculated with spectrum element $S = G$ from FEM results.

**Figure 7.** Comparison of damage metrics for growing cracks at locations a) $\beta_{in} = 90°$ and b) $\beta_{out} = 145°$. All damage metrics are calculated with spectrum element $S = G$ from FEM results.

**Figure 8.** Identification of sensitive resonance frequencies: a) Mean stress spectra $\overline{\sigma_1}$ of pristine necked lug, b) FEM stress results $\sigma_1$ in the defined range of $\pm 10°$ around each location of possible crack initiation are used to calculate the mean values of major principal stresses $\overline{\sigma_1}$.

**Figure 9.** Spectra of pristine and damaged necked lug of a) conductance simulated with FEM, b) conductance measured with the IMA, c) mean out-of-plane vibration results simulated with FEM, d) mean out-of-plane vibration results measured with the SLDV. Resonance frequency shifts $\Delta f_1$ and $\Delta f_2$ to identify the distinct crack location are highlighted with $\oplus_{1,2}$ in pristine spectra and with $+_{1,2}$ in spectra of the cracked lug, with $a_{in} = 2$ mm, $\beta_{in} = 90°$.

**Figure 10.** Comparison of numerically calculated conductance spectra for growing cracks at location a) $\beta_{in} = 90°$ and b) $\beta_{out} = 145°$. Detailed plot of frequency spectra around each resonance frequency. Relations between frequency shifts $\Delta f_1$ and $\Delta f_2$ is based on absolute values.

**Figure 11.** Comparison of in-plane radial vibration mode shape of pristine necked lug at a) $f_{pristine}^{FEM} = 67\,875\,Hz$ for FEM and b) $f_{pristine}^{SLDV} = 68\,031\,Hz$ for SLDV.

**Figure 12.** Shift of resonance peaks $\Delta f$ due to growing cracks at $\beta_{\text{in}} = 90°$ and $\beta_{\text{out}} = 145°$ in necked lugs with different geometries according to Table 3.

Europäisches
Patentamt

European
Patent Office

Office européen
des brevets

# EUROPEAN SEARCH REPORT

Application Number

EP 20 02 0565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/353620 A1 (GIURGIUTIU VICTOR [US] ET AL) 21 November 2019 (2019-11-21) * abstract * * paragraphs [0024], [0042], [0052], [0081], [0082] * * figures 13, 22 * ----- | 1-14 | INV. G01M5/00 |
| A | WO 2011/127073 A1 (GEORGIA TECH RES INST [US]; DIXIT AKASH [US] ET AL.) 13 October 2011 (2011-10-13) * abstract * * paragraph [0147] * ----- | 1-3 | |
| A | KR 2011 0095759 A (NAT UNIV PUKYONG IND UNIV COOP [KR]) 25 August 2011 (2011-08-25) * abstract * * figure 2 * ----- | 9-12 | |
| A | US 2016/109416 A1 (SOHN HOON [KR] ET AL) 21 April 2016 (2016-04-21) * abstract * * figures 2(a)-2(d) * ----- | 9-12 | TECHNICAL FIELDS SEARCHED (IPC) G01M |

The present search report has been drawn up for all claims

| Place of search | Date of completion of the search | Examiner |
|---|---|---|
| The Hague | 11 May 2021 | Grewe, Clemens F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 02 0565

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2021

| Patent document cited in search report | Publication date | Patent family member(s) | Publication date |
|---|---|---|---|
| US 2019353620 A1 | 21-11-2019 | NONE | |
| WO 2011127073 A1 | 13-10-2011 | US 2013204592 A1<br>WO 2011127073 A1 | 08-08-2013<br>13-10-2011 |
| KR 20110095759 A | 25-08-2011 | NONE | |
| US 2016109416 A1 | 21-04-2016 | CN 105164493 A<br>KR 101414520 B1<br>US 2016109416 A1<br>WO 2014178518 A1 | 16-12-2015<br>04-07-2014<br>21-04-2016<br>06-11-2014 |

EPO FORM P0459

For more details about this annex : see Official Journal of the European Patent Office, No. 12/82